# EUROPÄISCHE PATENTSCHRIFT

(11) **EP 3 349 226 B1**
(45) Veröffentlichungstag und Bekanntmachung des Hinweises auf die Patenterteilung: **27.11.2019**
(21) Anmeldenummer: 18000022.6
(22) Anmeldetag: 13.01.2018
(51) Int. Cl.: H01F 27/28, H01F 41/10, B23K 20/12, H01R 4/62

(54) **TRANSFORMATORSPULE**
TRANSFORMER COIL
BOBINE DE TRANSFORMATEUR

(30) Priorität: 15.01.2017 DE 102017000234
(43) Veröffentlichungstag der Anmeldung: 18.07.2018
(73) Patentinhaber: Sächsisch-Bayerische Starkstrom-Gerätebau GmbH, 08496 Neumark (DE)
(72) Erfinder: Schmidt, Uwe, D-08527 Plauen (DE); Tiepner, Frank, 08496 Neumark (DE); Wunderlich, Matthias, D-09212 Limbach-Oberfrohna (DE)
(74) Vertreter: Auerbach, Bettina

(56) Entgegenhaltungen:
- DE-A1-102006 031 839
- DE-A1-102010 023 115
- JP-A- H10 335 156

## Beschreibung

Die Erfindung betrifft eine Transformatorspule für den Transformatorenbau von Verteil-, Mittelleistungs- und Leistungstransformatoren mit einer speziellen Ausbildung der Stromausleiter und/oder der Stromeinleiter zur kostengünstigen Fertigung dieser.

Aus dem bisherigen Stand der Technik ist bekannt, dass die Anbindung der Stromaus- bzw. Stromeinleiter an das Wickelband einer Transformator-Bandwickelspule mittels Wolfram-Inertgas (WIG) - oder Kaltpressschweißverfahren realisiert wird, um eine feste Verbindung zwischen diesen Teilen zu erzeugen.

WIG-Schweißen ist nur für eine Verbindung gleicher Werkstoffe geeignet. Der erforderliche elektrische Querschnitt der Naht benötigt dabei verfahrensbedingt die gesamte Bandbreite. Beim KPS sind auch die häufig erforderlichen Mischverbindungen realisierbar; dabei werden mittels mehrerer notwendiger Stempelhübe über die gesamte Bandbreite der Bandwickelung die Stromein- bzw. -ausleiter punktuell verschweißt. Diese punktuelle Verbindung wird nacheinander (seriell) durchgeführt und erfordert einen dementsprechend notwendigen Zeitaufwand. Da es sich nicht um eine durchgängige Materialverbindung handelt, ist auch der Stromfluss zwischen dem Wickelband und den Stromein- bzw. - ausleitern auf punktförmige Fügestellen mit definierter Kontaktfläche beschränkt, welche sich -bedingt durch die Breite des Stempels- nur in einem bestimmten Abstand positionieren lassen. Deshalb ist es auch notwendig, diese Verbindung über die gesamte Bandbreite des Wickelbandes herzustellen.

DE 10 2010 023115 offenbart eine Leiteranordnung für einen Transformator bestehend aus einem Bandleiter und einem damit elektrisch verbundenen Anschlussleiter.

DE 10 2006 031839 offenbart eine elektrische Verbindung zwischen einem Flachleiter und einem Kontaktelement durch eine Reibschweißverbindung.

JP H10 335156 offenbart ein weiteres Beispiel einer Verbindung zwischen einem Flachleiter und einem Kontaktelement für eine Transformatorspule.

Der Erfindung liegt die Aufgabe zugrunde, eine technische Möglichkeit zu schaffen, mit deren Hilfe bei Transformatorspulen, vorzugsweise Verteil- und Mittelleistungs- und Leistungstransformatoren sowohl für Nass- als auch für Trockentransformatoren, eine sichere Verbindung zwischen Wickelband und Stromein- bzw. -ausleiter zu schaffen, welche einen optimalen Stromfluss gewährt und dabei dennoch die Möglichkeit schafft sowohl, die Kosten für das notwendige Ausleitermaterial zu minimieren und auch die Zeit zur Herstellung einer Verbindung der Ein- bzw. Ausleiter an das Wickelband zu verkürzen. Gleichzeitig sollen die Stromverluste beim Stromdurchfluss an den Übergängen von Bandwicklung und Ein- bzw. Ausleiter verringert werden.

Erfindungsgemäß wird die Aufgabe durch die Merkmale des Anspruchs 1 gelöst, wobei die vorteilhaften Ausgestaltungen in den Unteransprüchen beschrieben sind.

Danach besteht eine als Bandwicklung ausgeführte Unterspannungsspule eines Verteil-, Mittelleistungs- oder Leistungstransformatoren aus einer Bandwickelspule mit einem Stromeinleiter und einem Stromausleiter, wobei an dem jeweiligen Endabschnitt der Bandwickelung jeweils ein um ungefähr die Hälfte der Abmessung der Wickelbandbreite verkürzter Stromableiter (Stromein-und/oder Stromausleiter) angeordnet ist.

Dieser Stromein- und/oder Stromausleiter ist dabei nur einseitig und nur mit einem Teil der Bandwickelbreite, jedoch mittels einer durchgängig materialschlüssigen Reibrührschweißverbindung fest verbunden angeordnet. Der Stromein- und/oder Stromausleiter ragt dabei dennoch teilweise aus der Bandwickelung einseitig heraus. An dem gegenüberliegenden frei bleibenden Abschnitt des Wickelbandendes ist ein formstabiler Abstandshalter angeordnet, welcher den gekürzten Teil des Stromein- bzw. -ausleiters ersetzt, um die Bandwickelung geometrisch zu stabilisieren und Formabweichungen entgegenzuwirken. Deshalb ist der mechanische Abstandshalter mit einer der Materialstärke des Ein- bzw. Ausleiters entsprechenden Dimensionierung ausgebildet.

Die mechanischen Abstandshalter werden demzufolge immer dort angeordnet, wo die Stromein- bzw. -ausleiter an den Bandendbereichen infolge der möglichen Verkürzung dieser fehlen, also eine Art Dummy. Dabei ist es egal, ob die Ein- bzw. Ausleiter am Wickelbeginn der Spule (innen) oder am Wicklungsende (außen) angeordnet sind. Ein Abstandshalter ist immer notwendig. Um Fehlströme im Betrieb des Transformators zu vermeiden, sind diese aus einem Isoliermaterial ausgebildet. Ebenso ist es zweckdienlich, wenn das Material für die Abstandshalter temperaturbeständig ist, da sowohl im Rahmen der weiteren Bearbeitungsprozesse bei der Herstellung von Transformatoren als auch im späteren Betrieb eine Wärmebelastung erfolgen kann, beispielsweise beim thermischen Verkleben der Spulen und bei der Trocknung des Aktivteils. Hierzu geeignet sind Abstandshalter aus beispielsweise kostengünstigem Pressspanmaterial.

Um einen professionellen Ersatz für die fehlenden Ausleiterbereiche zu schaffen, ist es von Vorteil, wenn die Abstandshalter eine dem Ausleiterquerschnitt annähernd entsprechende Querschnittsform aufweisen.

Die Längendimensionierung der Verbindungsstelle zwischen Aus- bzw. Einleiter und der Wickelband wird bestimmt durch das Maß der Materialstärke der Ein- und Ausleiter in Bezug auf die Bandmaterialstärke und dem dazu passenden Maß der ausgewählten Stiftbreite des Rührreibwerkzeuges.

Dadurch wird eine durchgängige, stabile materialschlüssige Verbindung geschaffen, deren vergrößerte Kontaktfläche es ermöglicht, die erforderliche Verbindungslänge zu reduzieren und somit das notwendige Maß der Ein- bzw. Ausleiter um wenigstens die Hälfte der bisher notwendigen Abmessung (volle Bandbreite plus der notwendige Anschlussüberstand) zu verkürzen und demzufolge hochwertiges Material einzusparen, Gewicht zu reduzieren, aber vor allem ohne dabei auf eine qualitative Stromzu- bzw. abfuhr in bzw. aus der Spule verzichten zu müssen. Im Gegenteil, durch die materialschlüssige vollflächige Verbindungsstelle zwischen den Ein- bzw. Ausleitern und dem jeweiligen Wickelbandanfang bzw. -ende erfolgt ein optimaler Stromfluss ohne Fehlstromausbildung.

Die Erfindung soll anhand von einem Ausführungsbeispiel näher erläutert werden.

Dazu zeigen
- Fig. 1: einen schematischen Querschnitt einer Spule mit einem inneren Einleiter und einem äußeren Ausleiter;
- Fig. 2: eine schematische Darstellung eines Spulenbandes mit der Anordnung eines verkürzten Einleiters und eines verkürzten Ausleiters und dem diesen jeweils entgegengesetzt angeordneten Abstandshaltern;
- Fig. 3: eine tabellarische Vergleichsübersicht zur möglichen Ausleiterverkürzung durch Reibrührschweißverbindung gegenüber Kaltpressschweißen bei der Anordnung von Ausleitern an bestimmten Banddimensionierungen und Bandmaterialien.

### Ausführungsbeispiel:

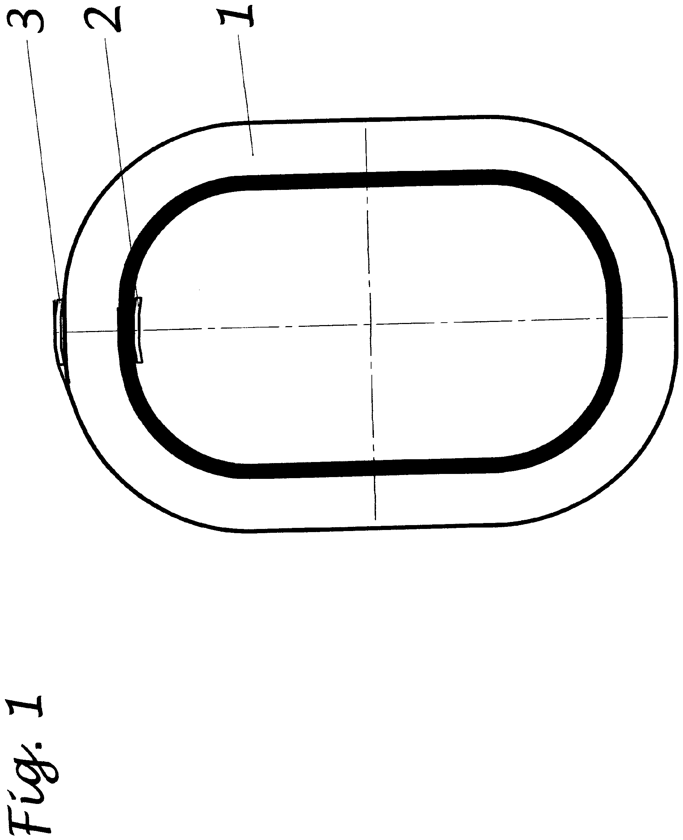

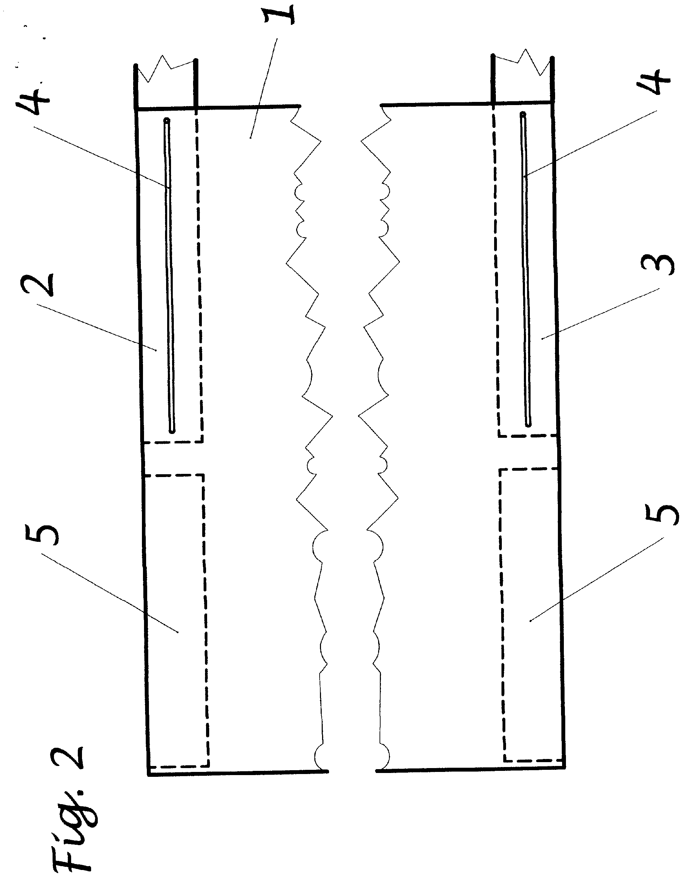

Gemäß der Figuren 1 bis 3 besteht eine Transformator-Bandwickelspule aus der Bandwicklung 1 und den Stromeinleiter 2 und dem Stromausleiter 3 für einen Starkstromtransformator. Die Stromein-und Stromausleiter 2,3 weisen in ihrem Längenmaß wenigstens die Hälfte der Abmessung der Bandbreite des Wickelbandes 1 auf und sind einseitig an dem jeweiligen Endabschnitt der Bandwickelung 1 angeordnet. Die Anordnung erfolgt mittels einer durchgängig materialschlüssigen Rührreibschweißverbindung 4 an einer freien Hälfte der Breite des Wickelbandendes so, dass dennoch teilweise ein Teil des Ausleiters aus der Bandwickelung 1 einseitig herausragt. An dem gegenüberliegenden frei bleibenden Abschnitt der Bandbreite an den Enden der Bandwicklung 1 ist ein formstabiler Abstandshalter 5 angeordnet, welche in seiner Dimensionierung der Form und der Materialstärke des Ein- bzw. Ausleiters 2 ,3 entspricht.

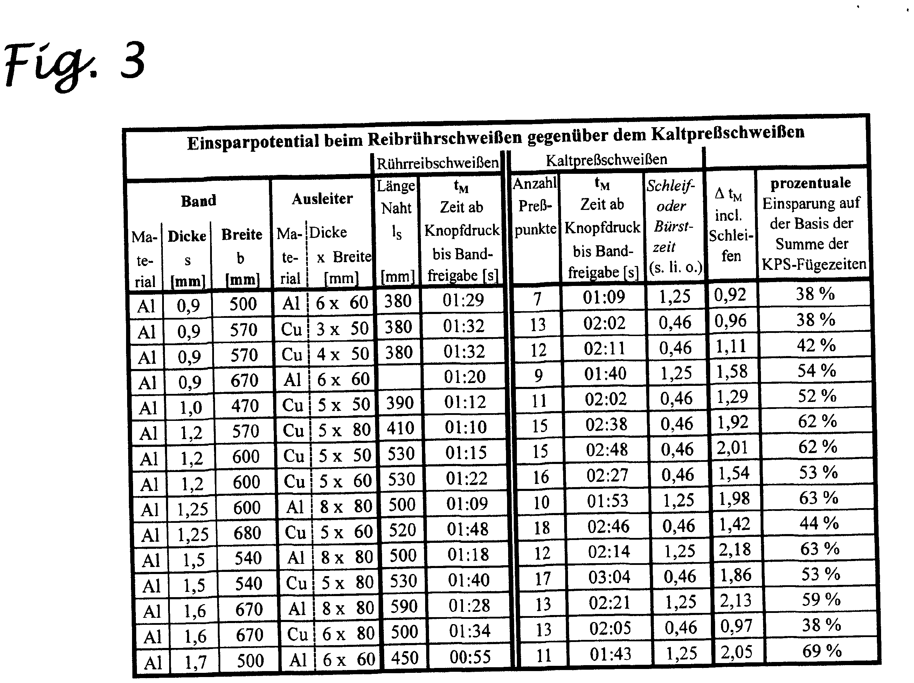

Die Länge der durchgängig materialschlüssigen Rührreibschweißverbindung 4 zur Anordnung der Ausleiter 2, 3 an den Wickelband 1 ist abhängig ist von den notwendigen Materialstärken der Ausleiter 2,3 und dem Wickelband 1 und der dazu passend ausgewählten Stiftbreite des Rührreibwerkzeugs. Eine beispielhafte Übersicht zu den Materialien der Bandwickelung 1 und der Ausleiter 2,3 und der Länge der Schweißnaht geht aus der beigefügten Übersicht Fig. 3 hervor.

Aus dieser Übersicht sind auch die verbesserten Fertigungszeiten für die Anordnung der Ausleiter an das Wickelband in Gegenüberstellung zum Kaltpressschweißen ersichtlich.

Vorteilhafter Weise sind die Abstandshalter 5 aus einem Isoliermaterial ausgebildet, um Fehlströme zu verhindern. Dazu eignen sich Kunststoffprofile, Preßspankörper und dergleichen.

Im Querschnitt weisen die Abstandshalter 5 vorzugsweise den annähern gleichen Querschnitt wie die Ausleiter 2, 3 auf, so dass das Wickelband gleichmäßig gewickelt ist.

Eine weitere vorteilhafte Ausgestaltung sieht vor, dass die Abstandshalter 5 aus einem temperaturbeständigen Material ausgebildet sind. So wird verhindert, dass bei weiteren zu verwendenden Fertigungsverläufen zur Herstellung eines Transformators und bei dessen Betreiben die entstehenden Temperaturbelastungen nicht zu einer Deformierung der Abstandshalter führen.

Mit der vorliegenden Erfindung ist es möglich, eine Transformatorspule zu schaffen, welche eine sichere Verbindung zwischen Wickelband 1 und Ausleiter 2, 3 aufweist, wobei diese Verbindung schneller hergestellt werden kann, was dennoch dazu führt, dass der Ein- und/oder Ausleiter 2, 3 materialsparend verkürzt ausgebildet sein kann und dennoch mit einer effizienteren Stromflussquote funktioniert.

### Bezugszeichenliste

- 1: Bandwicklung
- 2: Stromeinleiter
- 3: Stromausleiter
- 4: Rührreibschweißverbindung
- 5: Abstandshalter

## Patentansprüche

1. Transformatorspule als Bandwickelspule mit einem Stromeinleiter und einem Stromausleiter für Bandwickeltransformatoren, **dadurch gekennzeichnet, dass** ein um wenigstens die Hälfte der Abmessung der Wickelbandbreite verkürzter Stromein-und/oder Stromausleiter (2,3) an dem jeweiligen Endabschnitt der Bandwickelung (1) und dabei nur mit einem Teil der Breite der Bandwickelung (1) mittels einer durchgängig materialschlüssigen Rührreibschweißverbindung (4) fest verbunden und dabei dennoch teilweise aus der Bandwickelung (1) einseitig herausragend angeordnet ist und
dass an dem gegenüberliegenden frei bleibenden Abschnitt der Bandbreite an den Enden der Bandwicklung (1) ein dem der Materialstärke des Ein- bzw. Ausleiters entsprechender formstabiler Abstandshalter (5) angeordnet ist.

2. Transformatorspule als Bandwickelspule nach dem Anspruch 1, **dadurch gekennzeichnet, dass** die Länge der durchgängig materialschlüssigen Reibrührschweißverbindung (4) zwischen dem Ende des Wickelbandes (1) und dem Stromableiter (2, 3) abhängig ist von dessen jeweils notwendigen Materialstärken und der dazu passend ausgewählten Stiftbreite des Rührreibwerkzeugs.

3. Transformatorspule als Bandwickelspule nach einem der Ansprüche 1 und 2, **dadurch gekennzeichnet, dass** die Abstandshalter (5) aus einem Fehlströme verhindernden Isoliermaterial ausgebildet ist.

4. Transformatorspule als Bandwickelspule nach einem der Ansprüche 1 bis 3, **dadurch gekennzeichnet, dass** die Abstandshalter (5) eine dem geometrischen Ausleiterquerschnitt annähernd entsprechende Querschnittsform aufweist.

5. Transformatorspule als Bandwickelspule nach einem der Ansprüche 1 bis 4, **dadurch gekennzeichnet, dass** die Abstandshalter (5) aus einem temperaturbeständigem Material ausgebildet sind.

## Claims

1. Transformer coil as a tape-wound coil having an input conductor and an output conductor for tape-wound transformers, **characterized in that** an input conductor and/or output conductor (2, 3) that is shortened by at least half of the dimension of the winding tape width is rigidly connected to the relevant end portion of the tape winding (1), and only to part of the width of the tape winding (1), by means of a continuously integrally bonded friction stir welding joint (4), and is arranged so as to partially protrude from the tape winding (1) on one side, and **in that** a dimensionally stable spacer (5) corresponding to the material thickness of the input conductor and output conductor, respectively, is arranged at the opposite, free portion of the tape width at the ends of the tape winding (1).

2. Transformer coil as a tape-wound coil according to claim 1, **characterized in that** the length of the continuously integrally bonded friction stir welding joint (4) between the end of the winding tape (1) and the conductor (2, 3) is dependent on the material thicknesses thereof required in each case and the correspondingly selected pin width of the friction stir welding tool.

3. Transformer coil as a tape-wound coil according to either claim 1 or claim 2, **characterized in that** the spacers (5) are formed from an insulating material that prevents fault currents.

4. Transformer coil as a tape-wound coil according to any of claims 1 to 3, **characterized in that** the spacers (5) have a cross-sectional shape approximately corresponding to the geometric cross section of the output conductor.

5. Transformer coil as a tape-wound coil according to any of claims 1 to 4, **characterized in that** the spacers (5) are formed from a temperature-resistant material.

## Revendications

1. Bobine de transformateur comme bobine d'enroulement de bande comportant un inducteur de courant et un évacuateur de courant pour transformateurs à enroulement de bande, **caractérisée en ce qu'**un inducteur de courant et/ou un évacuateur de courant (2, 3) raccourci est disposé autour d'au moins la moitié de la dimension de la largeur de bande d'enroulement au niveau de la section d'extrémité respective de l'enroulement de bande (1) et n'est ainsi relié solidement qu'à une partie de la largeur de l'enroulement de bande (1) au moyen d'un joint de soudage par friction à mouvement cyclique (4) par liaison de matière uniforme, et est néanmoins partiellement disposé en saillie sur un côté à partir de l'enroulement de bande (1), et **en ce qu**'un élément d'écartement (5) indéformable correspondant à l'épaisseur de matériau de l'inducteur ou de l'évacuateur de courant est disposé sur la section opposée libre de la largeur de bande aux extrémités de l'enroulement de bande (1).

2. Bobine de transformateur comme bobine d'enroulement de bande selon la revendication 1, **caractérisée en ce que** la longueur du joint de soudage par friction à mouvement cyclique (4) par liaison de matière uniforme entre l'extrémité de la bande d'enroulement (1) et le collecteur de courant (2, 3) dépend de ses épaisseurs de matériau respectives et de la largeur de broche dûment sélectionnée de l'outil de soudage par friction à mouvement cyclique.

3. Bobine de transformateur comme bobine d'enroulement selon l'une quelconque des revendications 1 et 2, **caractérisée en ce que** les éléments d'écartement (5) sont formés à partir d'un matériau isolant empêchant les courants de défaut.

4. Bobine de transformateur comme bobine d'enroulement selon l'une des revendications 1 à 3, **caractérisée en ce que** les éléments d'écartement (5) présentent une forme de section transversale correspondant à peu près à la section transversale géométrique de l'évacuateur de courant.

5. Bobine de transformateur comme bobine d'enroulement selon l'une des revendications 1 à 4, **caractérisée en ce que** les éléments d'écartement (5) sont formés à partir d'un matériau résistant à la température.
